# FASCICULE DE BREVET EUROPEEN

(11) **EP 3 356 690 B1**
(45) Date de publication et mention de la délivrance du brevet: **14.08.2019**
(21) Numéro de dépôt: 16774551.2
(22) Date de dépôt: 26.09.2016
(51) Int. Cl.: F16C 11/12, G04B 17/04, G04B 13/02, G04B 17/10, G04B 31/00

(54) **COMPOSANT MÉCANIQUE À PIVOT FLEXIBLE ET DISPOSITIF HORLOGER LE COMPRENANT**
MECHANISCHE KOMPONENTE MIT FLEXIBLER DREHACHSE, INSBESONDERE FÜR UHRWERKE
MECHANICAL COMPONENT WITH FLEXIBLE PIVOT, IN PARTICULAR FOR CLOCKMAKING

(30) Priorité: 29.09.2015 EP 15187246
(43) Date de publication de la demande: 08.08.2018
(73) Titulaire: Patek Philippe SA Genève, 1204 Genève (CH)
(72) Inventeur: MAIER, Frédéric, 2000 Neuchâtel (CH); CHABLOZ, David, 74700 Sallanches (FR)
(74) Mandataire: Micheli & Cie SA
(86) Numéro de dépôt international: PCT/IB2016/055733
(87) Numéro de publication internationale: WO 2017/055983

(56) Documents cités:
- EP-A1- 2 911 012
- EP-A2- 2 887 151
- WO-A1-84/03823
- DE-C- 201 823
- US-A- 3 465 997
- US-A- 3 520 127
- US-A- 3 605 176

## Description

La présente invention concerne un composant mécanique à pivot flexible, notamment pour l'horlogerie.

Les composants mécaniques à pivot flexible sont conçus pour pivoter sans axe de rotation physique, donc sans frottements, autour d'un axe de rotation virtuel, grâce à un agencement de parties élastiques.

Différents types de pivots flexibles existent, tels que les pivots à lames croisées séparées, les pivots à lames croisées non séparées ou les pivots à centre de rotation déporté dits « RCC » (Remote Center Compliance).

La présente invention concerne le premier type de pivots flexibles, à savoir les pivots à lames croisées séparées. Ces pivots sont connus pour leur faible raideur, qui permet leur utilisation dans des parties d'un mouvement horloger où peu d'énergie est disponible. Des exemples de tels pivots sont décrits dans les brevets US 3 520 127 et DE 201 823 et la demande de brevet EP 2 911 012.

Un pivot à lames croisées séparées comprend deux lames élastiques qui relient une partie de fixation du composant à une partie mobile du composant et qui se croisent sans contact en un point de croisement.

La position du point de croisement des lames a son importance car elle influence la précision de fonctionnement du composant. Cependant, les techniques de fabrication actuelles, même les plus précises, ne permettent pas de garantir un positionnement optimal de ce point.

La présente invention vise à remédier, en partie au moins, à cet inconvénient et propose à cette fin un dispositif horloger comprenant un composant mécanique à pivot flexible du type à lames croisées séparées comprenant une partie de fixation et une partie mobile reliées par des première et deuxième lames élastiques se croisant sans contact en un point de croisement, ledit dispositif horloger étant caractérisé en ce qu'il comprend des moyens de réglage pour régler la position du point de croisement.

Typiquement, l'une au moins de la partie de fixation et de la partie mobile comprend une première partie et une deuxième partie qui sont mobiles l'une par rapport à l'autre, et les moyens de réglage sont agencés pour régler la position du point de croisement par un réglage de la position relative de ces première et deuxième parties.

Les première et deuxième parties peuvent être mobiles l'une par rapport à l'autre en translation ou, en variante, en rotation.

Le composant mécanique à pivot flexible peut comprendre des moyens de liaison reliant élastiquement les première et deuxième parties.

De préférence, ces moyens de liaison sont agencés pour autoriser un déplacement relatif des première et deuxième parties seulement dans une direction déterminée, en translation ou en rotation.

Dans des applications particulières, le composant mécanique à pivot flexible est, ou comprend, un oscillateur, un levier, une bascule ou une ancre d'échappement.

Le composant mécanique à pivot flexible est de préférence monolithique.

Les moyens de réglage peuvent comprendre, par exemple, un excentrique de réglage ou une vis micrométrique de réglage.

En variante, les moyens de réglage peuvent comprendre un ensemble de pièces calibrées, le réglage de la position du point de croisement s'effectuant en assemblant au moins l'une de ces pièces au composant mécanique à pivot flexible.

La présente invention propose également un composant horloger mécanique à pivot flexible du type à lames croisées séparées, comprenant une partie de fixation et une partie mobile reliées par des première et deuxième lames élastiques se croisant sans contact en un point de croisement, caractérisé en ce que l'une au moins de la partie de fixation et de la partie mobile comprend une première partie et une deuxième partie qui sont mobiles l'une par rapport à l'autre et qui sont respectivement reliées à l'autre de la partie de fixation et de la partie mobile par les première et deuxième lames élastiques, et en ce que la position du point de croisement est réglable par un réglage de la position relative de ces première et deuxième parties.

La présente invention propose également un composant mécanique à pivot flexible du type à lames croisées séparées, notamment pour l'horlogerie, comprenant une partie de fixation et une partie mobile reliées par des première et deuxième lames élastiques se croisant sans contact en un point de croisement, ledit composant horloger étant monolithique et caractérisé en ce que la position du point de croisement est réglable.

La présente invention propose en outre un mouvement horloger comprenant un dispositif horloger ou un composant mécanique à pivot flexible tel que défini ci-dessus.

La présente invention propose enfin un procédé de montage d'un tel mouvement horloger, caractérisé en ce que le composant mécanique à pivot flexible est, ou comprend, un oscillateur, et en ce que le procédé comprend une étape consistant à régler la position du point de croisement sur la base de mesures d'isochronisme.

D'autres caractéristiques et avantages de la présente invention apparaîtront à la lecture de la description détaillée suivante faite en référence aux dessins annexés dans lesquels :
- les figures 1 et 2 sont respectivement une vue plane de dessus et une vue en perspective d'un oscillateur mécanique à pivot flexible selon un premier mode de réalisation de l'invention ;
- la figure 3 montre une courbe d'écart de marche de l'oscillateur mécanique à pivot flexible selon l'invention en fonction de la position d'un point de croisement de lames élastiques formant le pivot flexible ;
- la figure 4 est une vue en perspective d'un exemple de dispositif de réglage associé à l'oscillateur mécanique à pivot flexible selon le premier mode de réalisation de l'invention ;
- les figures 5 et 6 sont respectivement une vue plane de dessus et une vue en perspective d'un oscillateur mécanique à pivot flexible selon un deuxième mode de réalisation de l'invention ;
- la figure 7 est une vue en perspective d'un oscillateur mécanique à pivot flexible selon un troisième mode de réalisation de l'invention ;
- la figure 8 est une vue en perspective de l'oscillateur mécanique à pivot flexible selon le troisième mode de réalisation équipé de moyens de réglage ;
- la figure 9 est une vue en perspective d'un oscillateur mécanique à pivot flexible selon un quatrième mode de réalisation de l'invention, équipé de moyens de réglage.

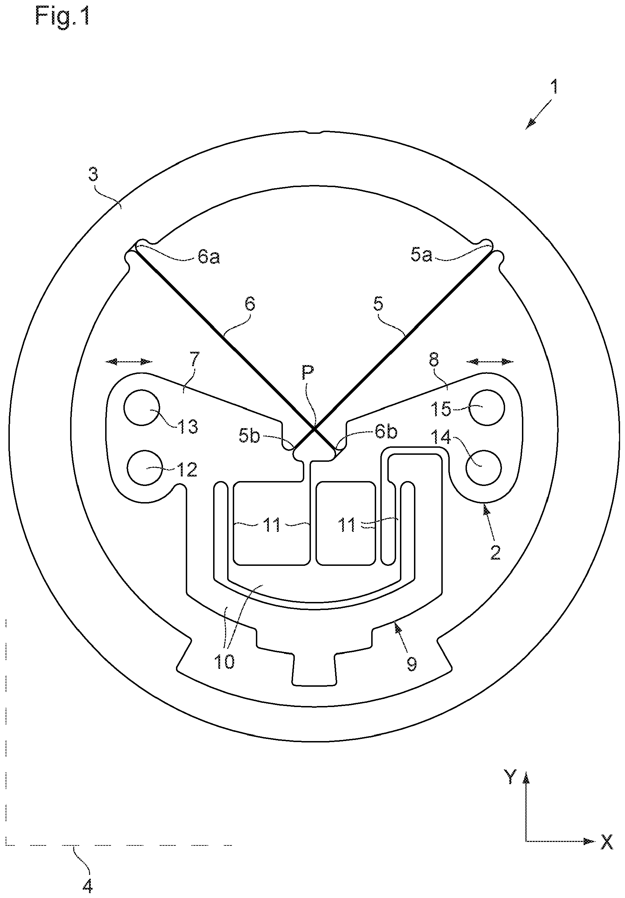

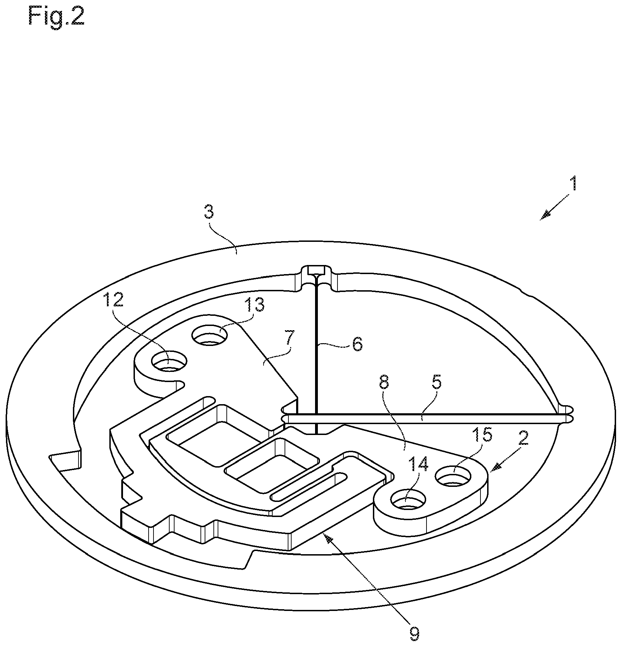

En référence aux figures 1 et 2, un oscillateur mécanique à pivot flexible 1 selon un premier mode de réalisation de l'invention comprend une partie de fixation 2 et une partie mobile 3 qui entoure la partie de fixation 2. La partie de fixation 2 sert à monter l'oscillateur 1 sur un support fixe ou mobile 4 tel qu'une platine ou un organe de l'échappement, par exemple une ancre, d'un mouvement horloger. En fonctionnement, la partie mobile 3 oscille par rapport à la partie de fixation 2 et joue ainsi le rôle d'un balancier. La partie de fixation 2 et la partie mobile 3 sont reliées par des première et deuxième lames élastiques 5, 6 de même longueur qui se croisent sans contact en s'étendant dans deux plans parallèles différents. En vue plane de dessus, ces lames élastiques 5, 6 se croisent en un point P qui constitue le centre de rotation de la partie mobile 3 par rapport à la partie de fixation 2. De façon plus précise, la droite formant l'intersection des surfaces passant par les fibres neutres des lames élastiques 5, 6 et perpendiculaires au plan de l'oscillateur 1 (plan de la figure 1) constitue l'axe de rotation de la partie mobile 3 par rapport à la partie de fixation 2. Les lames élastiques 5, 6 exercent sur la partie mobile 3, par rapport à la partie de fixation 2, un couple de rappel à l'instar du spiral d'un oscillateur balancier-spiral. L'oscillateur 1 est associé à un échappement (non représenté) qui peut être de type classique tel qu'un échappement à ancre suisse ou de tout autre type.

La partie de fixation 2 est elle-même en deux parties, à savoir une première partie 7 et une deuxième partie 8. La première lame élastique 5 est jointe par une première extrémité 5a à la partie mobile 3 et par sa deuxième extrémité 5b à la première partie 7. La deuxième lame élastique 6 est jointe par une première extrémité 6a à la partie mobile 3 et par sa deuxième extrémité 6b à la deuxième partie 8. Un organe de liaison 9 relie élastiquement les première et deuxième parties 7, 8. L'organe de liaison 9 est composé de parties rigides 10 et de parties élastiques 11 agencées pour autoriser un déplacement relatif des première et deuxième parties 7, 8 seulement en translation selon un axe X, les déplacements parasites en translation selon les autres directions ou en rotation étant empêchés. Cette translation pure selon l'axe X des première et deuxième parties 7, 8 engendre une translation pure, donc aisément maîtrisable, de la partie mobile 3 selon un axe Y perpendiculaire à l'axe X. Dans des variantes, toutefois, l'organe de liaison 9 pourrait être omis et les première et deuxième parties 7, 8 pourraient être libres l'une par rapport à l'autre. La première partie 7 de la partie de fixation 2 présente deux trous 12, 13. La deuxième partie 8 de la partie de fixation 2 présente deux trous 14, 15. Les trous 12, 14 permettent la manipulation de l'oscillateur 1 par un outil tel que des brucelles. Les trous 13, 15 sont destinés à recevoir des goupilles pour la fixation de l'oscillateur 1 au support fixe ou mobile 4. La mobilité relative en translation selon l'axe X des première et deuxième parties 7, 8 permet de régler l'écartement de ces dernières pendant l'assemblage du mouvement horloger pour régler la position du point P de croisement des lames élastiques 5, 6.

En effet, le point P de croisement des lames élastiques 5, 6 a une position qui dépend de la position relative des première et deuxième parties 7, 8. Plus les première et deuxième parties 7, 8 sont proches l'une de l'autre, plus le point de croisement P est proche des extrémités 5b, 6b des lames élastiques 5, 6. Inversement, plus les première et deuxième parties 7, 8 sont éloignées, plus le point de croisement P est proche des extrémités 5a, 6a des lames élastiques 5, 6. Selon la théorie développée par W.H. Wittrick, la position optimale du point de croisement P pour minimiser les déplacements parasites du centre de rotation de la partie mobile se situe à environ 12,7% (1/2 - √5/6) de la longueur de chaque lame élastique. La présente invention peut être utilisée pour obtenir une telle position du point de croisement P. La présente demanderesse a toutefois découvert qu'il était possible d'améliorer encore davantage le fonctionnement de l'oscillateur par un réglage de la position du point de croisement P, en choisissant une position du point de croisement P qui optimise l'isochronisme de l'oscillateur.

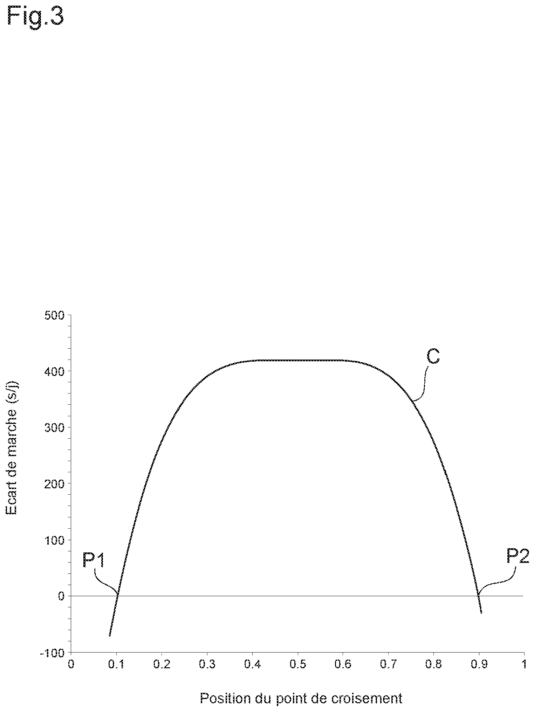

L'isochronisme d'un oscillateur tel que celui illustré aux figures 1 et 2 dépend de plusieurs paramètres, à savoir notamment les déplacements parasites du centre de rotation P, la variation de la raideur du pivot flexible (lames élastiques 5, 6) en fonction de l'angle de rotation, les perturbations apportées par l'échappement, et la gravité. La figure 3 montre une courbe C représentant l'écart de marche en secondes/jour de l'oscillateur 1 entre une amplitude d'oscillation de 20° et une amplitude d'oscillation de 2° en fonction du rapport de la distance entre le point de croisement P et l'extrémité 5b, 6b de chaque lame élastique 5, 6 sur la longueur de chaque lame élastique 5, 6. La courbe C est obtenue par simulation numérique et prend en compte les déplacements parasites du centre de rotation P et la variation de la raideur du pivot flexible en fonction de l'angle de rotation. Comme on peut le voir, il existe deux points P1, P2 de la courbe C où l'écart de marche est nul, c'est-à-dire où l'isochronisme est optimal. Dans l'exemple illustré, ces points P1, P2 sont respectivement à 10% et à 90% de la longueur des lames élastiques 5, 6. On peut voir aussi sur la figure 3 que la pente de la courbe C autour des points P1, P2 est forte. En raison des tolérances de fabrication, cette forte pente de la courbe C rend nécessaire un réglage de la position du point de croisement P le long de chaque lame élastique 5, 6 pour obtenir un isochronisme souhaité.

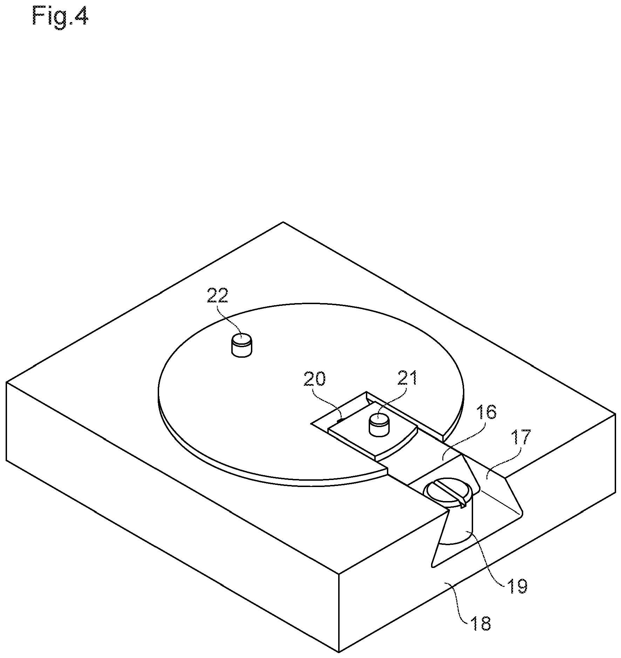

En pratique, chacune des première et deuxième parties 7, 8 de la partie de fixation 2, ou seulement l'une d'entre elles, peut être montée sur un dispositif de réglage monté lui-même sur le support 4. Le ou chaque dispositif de réglage est par exemple à excentrique ou à vis micrométrique associé(e) à un coulisseau ou à un système à guidage linéaire flexible. Un exemple de tel dispositif de réglage est illustré à la figure 4. Il comprend un coulisseau 16 guidé dans une rainure 17 d'un support 18 fixé sur le support fixe ou mobile 4 ou faisant partie de ce dernier. La position du coulisseau 16 dans la rainure 17 peut être réglée par un excentrique 19. Un ressort de rappel 20 maintient le coulisseau 16 en appui contre l'excentrique 19. Le coulisseau 16 porte une goupille 21 engagée dans le trou 15 de la deuxième partie 8 de la partie de fixation 2. Le support 18 porte une autre goupille 22 engagée dans le trou 13 de la première partie 7 de la partie de fixation 2. De nombreuses variantes sont toutefois possibles.

Dans la présente invention, l'horloger peut ainsi régler l'écartement des première et deuxième parties 7, 8 de la partie de fixation 2 et donc la position du point de croisement P lors du montage du mouvement, en se basant sur des mesures d'isochronisme tenant compte de tous les paramètres cités plus haut, à savoir les déplacements parasites du centre de rotation P, la variation de la raideur du pivot flexible (lames élastiques 5, 6) en fonction de l'angle de rotation, les perturbations apportées par l'échappement, et la gravité (causant des écarts de marche entre les différentes positions du mouvement). Par un tel réglage, l'isochronisme de l'oscillateur 1 peut être optimisé. Le réglage de la position du point de croisement P précontraint (fléchit) les lames élastiques 5, 6. Cette précontrainte ne gêne pas le fonctionnement de l'oscillateur.

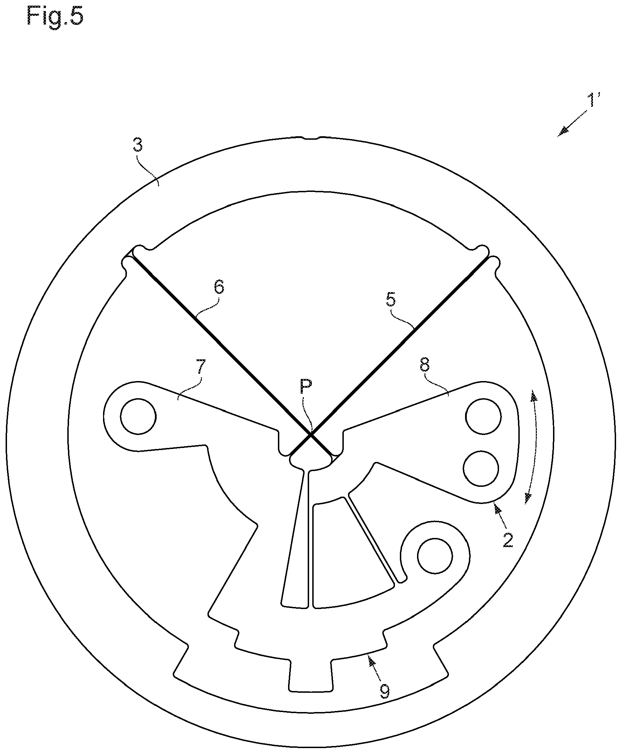

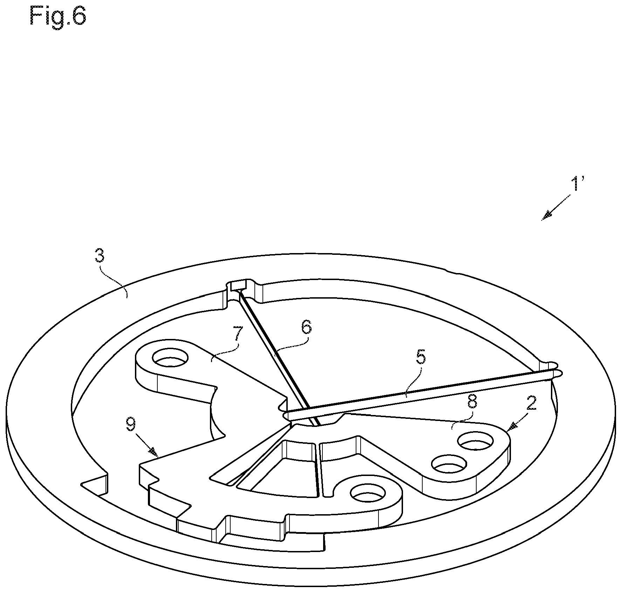

Les figures 5 et 6 montrent un oscillateur mécanique à pivot flexible 1' selon un deuxième mode de réalisation de l'invention. Cet oscillateur 1' diffère de l'oscillateur 1 des figures 1 et 2 par la forme de l'organe de liaison 9 reliant élastiquement les première et deuxième parties 7, 8 de la partie de fixation 2. L'organe de liaison 9 est en effet, ici, agencé pour autoriser un déplacement relatif entre les première et deuxième parties 7, 8 seulement en rotation, par exemple autour du point P de croisement des lames élastiques 5, 6 au repos. Un tel déplacement relatif en rotation permet aussi de régler la position du point P. L'oscillateur 1' peut être associé à un dispositif de réglage du même type que celui associé à l'oscillateur 1, mais à guidage en rotation.

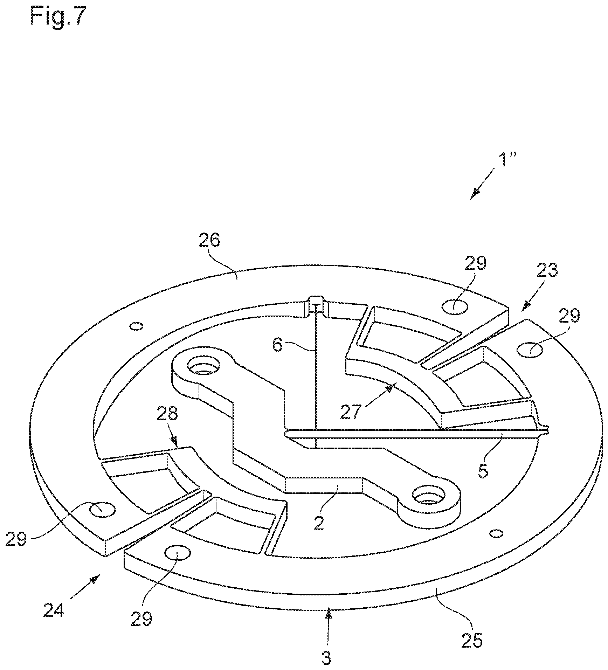

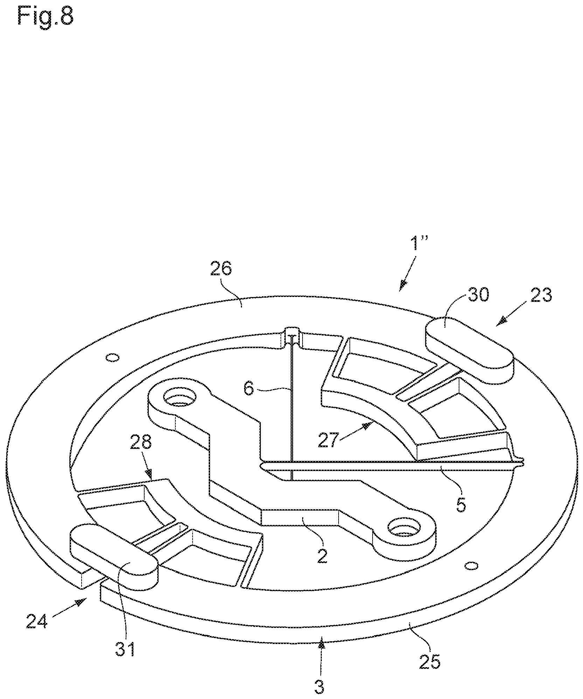

La figure 7 montre un oscillateur mécanique à pivot flexible 1" selon un troisième mode de réalisation de l'invention. Dans ce troisième mode de réalisation, c'est la partie mobile 3 qui est en deux parties reliées élastiquement entre elles. Plus précisément, la partie mobile 3 est sous la forme d'un anneau qui est interrompu dans deux zones diamétralement opposées 23, 24 pour définir deux arcs 25, 26. Ces deux arcs 25, 26 sont reliés dans les zones 23, 24 par deux organes de liaison 27, 28. Les organes de liaison 27, 28 sont agencés pour autoriser un déplacement relatif des arcs 25, 26 seulement en rotation, par exemple autour du point de croisement des lames élastiques 5, 6 au repos. Chaque arc 25, 26 présente à chacune de ses extrémités un trou 29. Ces trous 29 peuvent recevoir des tétons (non visibles sur les figures) de deux pièces de réglage 30, 31 (cf. figure 8) reliant les arcs 25, 26 dans les zones 23, 24 respectivement. Les pièces de réglage 30, 31 sont calibrées et sont choisies parmi un ensemble de pièces de réglage ayant des écartements de tétons différents, pour maintenir une position relative souhaitée des arcs 25, 26 contre une force de rappel élastique exercée par les organes de liaison 27, 28. Les pièces de réglage 30, 31 permettent ainsi un réglage incrémental de la position du point de croisement des lames élastiques 5, 6.

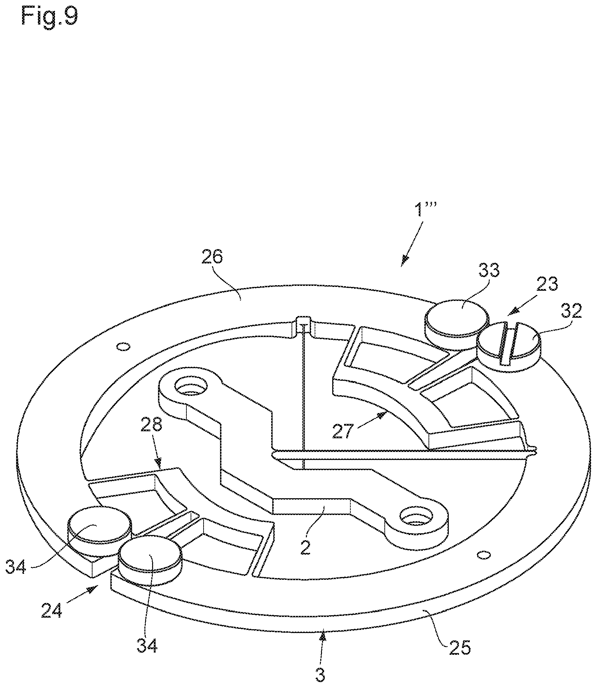

La figure 9 montre un oscillateur mécanique à pivot flexible 1'" selon un quatrième mode de réalisation de l'invention. Dans ce quatrième mode de réalisation, la position relative des deux arcs 25, 26 de la partie mobile 3, donc la position du point de croisement des lames élastiques 5, 6, peut être réglée au moyen d'un excentrique 32 porté par l'un des arcs 25, 26 et maintenu en appui contre un tenon 33 porté par l'autre arc dans la zone 23. Le maintien du contact entre l'excentrique 32 et le tenon 33 est assuré par les organes de liaison 27, 28 agissant sur les arcs 25, 26. Dans la zone 24 diamétralement opposée à la zone 23, les arcs 25, 26 portent des tenons 34 servant à équilibrer le balancier que constitue la partie mobile 3.

Chacun des premier et deuxième modes de réalisation pourrait être combiné avec l'un des troisième et quatrième modes de réalisation. Ainsi, dans la présente invention, le point P de croisement des lames élastiques 5, 6 pourrait être réglé par un réglage de la position relative des deux parties 7, 8 de la partie de fixation 2 et de la position relative des deux parties 25, 26 de la partie mobile 3.

L'oscillateur selon l'invention peut être fabriqué de manière monolithique, par exemple en silicium ou dans toute autre matière appropriée selon la technique de gravure ionique réactive profonde dite « DRIE » (Deep Reactive Ion Etching), en nickel, alliage de nickel ou toute autre matière appropriée selon la technique LIGA (lithographie, galvanoplastie, moulage), en acier, cuivre-béryllium, maillechort ou autre alliage métallique par fraisage ou par électroérosion, ou en verre métallique par moulage.

Une telle fabrication monolithique convient particulièrement à des oscillateurs destinés à fonctionner à des fréquences élevées. Pour des fréquences de fonctionnement plus basses, on peut rapporter sur l'oscillateur formé monolithiquement des pièces inertielles, telles qu'une serge et/ou des masselottes, réalisées dans un matériau plus dense que celui de l'oscillateur, comme décrit dans la demande de brevet EP 2 911 012.

Les lames élastiques 5, 6 telles qu'illustrées dans les dessins sont droites à l'état de repos (état où la position du point de croisement P n'a pas encore été réglée) mais elles pourraient, en variante, être courbes.

L'oscillateur selon l'invention peut comprendre plus de deux lames élastiques. Par exemple, il pourrait comprendre une deuxième paire de lames élastiques superposée à la première paire de lames élastiques 5, 6 et dont les deux lames se croiseraient sans contact au point de croisement P, pour augmenter la raideur du pivot flexible hors du plan de l'oscillateur.

La présente invention pourrait s'appliquer à d'autres composants mécaniques qu'un oscillateur, par exemple à une ancre d'échappement, un levier ou une bascule, pour augmenter leur précision de fonctionnement, régler la position du centre de rotation ou régler la position de la partie mobile.

## Revendications

1. Dispositif horloger comprenant un composant mécanique à pivot flexible (1 ; 1' ; 1" ; 1"') du type à lames croisées séparées, comprenant une partie de fixation (2) et une partie mobile (3) reliées par des première et deuxième lames élastiques (5, 6) se croisant sans contact en un point de croisement (P), ledit dispositif horloger étant **caractérisé en ce qu'**il comprend des moyens de réglage (16-21 ; 30, 31 ; 32) pour régler la position du point de croisement (P).

2. Dispositif horloger selon la revendication 1, **caractérisé en ce que** l'une au moins de la partie de fixation (2) et de la partie mobile (3) comprend une première partie (7 ; 25) et une deuxième partie (8 ; 26) qui sont mobiles l'une par rapport à l'autre, et **en ce que** les moyens de réglage (16-21 ; 30, 31 ; 32) sont agencés pour régler la position du point de croisement (P) par un réglage de la position relative de ces première et deuxième parties (7, 8 ; 25, 26).

3. Dispositif horloger selon la revendication 2, **caractérisé en ce que** les première et deuxième parties (7, 8 ; 25, 26) sont mobiles l'une par rapport à l'autre en translation.

4. Dispositif horloger selon la revendication 2, **caractérisé en ce que** les première et deuxième parties (7, 8 ; 25, 26) sont mobiles l'une par rapport à l'autre en rotation.

5. Dispositif horloger selon l'une quelconque des revendications 2 à 4, **caractérisé en ce qu'**il comprend des moyens de liaison (9 ; 27, 28) reliant élastiquement les première et deuxième parties (7, 8 ; 25, 26).

6. Dispositif horloger selon la revendication 5, **caractérisé en ce que** les moyens de liaison (9 ; 27, 28) sont agencés pour autoriser un déplacement relatif des première et deuxième parties (7, 8 ; 25, 26) seulement dans une direction déterminée.

7. Dispositif horloger selon l'une quelconque des revendications 1 à 6, **caractérisé en ce que** le composant mécanique à pivot flexible est, ou comprend, un oscillateur (1 ; 1' ; 1" ; 1"').

8. Dispositif horloger selon l'une quelconque des revendications 1 à 6, **caractérisé en ce que** le composant mécanique à pivot flexible est, ou comprend, un levier, une bascule ou une ancre d'échappement.

9. Dispositif horloger selon l'une quelconque des revendications 1 à 8, **caractérisé en ce que** le composant mécanique à pivot flexible est monolithique.

10. Dispositif horloger selon l'une quelconque des revendications 1 à 9, **caractérisé en ce que** les moyens de réglage (16-21 ; 32) comprennent un excentrique de réglage (19 ; 32) ou une vis micrométrique de réglage.

11. Dispositif horloger selon l'une quelconque des revendications 1 à 9, **caractérisé en ce que** les moyens de réglage comprennent un ensemble de pièces calibrées, le réglage de la position du point de croisement (P) s'effectuant en assemblant au moins l'une (30, 31) de ces pièces au composant mécanique à pivot flexible.

12. Composant horloger mécanique à pivot flexible du type à lames croisées séparées, comprenant une partie de fixation (2) et une partie mobile (3) reliées par des première et deuxième lames élastiques (5, 6) se croisant sans contact en un point de croisement (P), **caractérisé en ce que** l'une au moins de la partie de fixation (2) et de la partie mobile (3) comprend une première partie (7 ; 25) et une deuxième partie (8 ; 26) qui sont mobiles l'une par rapport à l'autre, et **en ce que** la position du point de croisement (P) est réglable par un réglage de la position relative de ces première et deuxième parties (7, 8 ; 25, 26).

13. Composant horloger mécanique à pivot flexible selon la revendication 12, **caractérisé en ce que** les première et deuxième parties (7, 8 ; 25, 26) sont mobiles l'une par rapport à l'autre en translation.

14. Composant horloger mécanique à pivot flexible selon la revendication 12, **caractérisé en ce que** les première et deuxième parties (7, 8 ; 25, 26) sont mobiles l'une par rapport à l'autre en rotation.

15. Composant horloger mécanique à pivot flexible selon l'une quelconque des revendications 12 à 14, **caractérisé en ce qu'**il comprend des moyens de liaison (9 ; 27, 28) reliant élastiquement les première et deuxième parties (7, 8 ; 25, 26).

16. Composant horloger mécanique à pivot flexible selon la revendication 15, **caractérisé en ce que** les moyens de liaison (9 ; 27, 28) sont agencés pour autoriser un déplacement relatif des première et deuxième parties (7, 8 ; 25, 26) seulement dans une direction déterminée.

17. Composant horloger mécanique à pivot flexible selon l'une quelconque des revendications 12 à 16, **caractérisé en ce qu'**il est, ou comprend, un oscillateur (1 ; 1' ; 1" ; 1'"), un levier, une bascule ou une ancre d'échappement.

18. Composant horloger mécanique à pivot flexible selon l'une quelconque des revendications 12 à 17, **caractérisé en ce qu'**il est monolithique.

19. Composant mécanique à pivot flexible du type à lames croisées séparées, comprenant une partie de fixation (2) et une partie mobile (3) reliées par des première et deuxième lames élastiques (5, 6) se croisant sans contact en un point de croisement (P), ledit composant étant monolithique et **caractérisé en ce que** la position du point de croisement (P) est réglable.

20. Composant mécanique à pivot flexible selon la revendication 19, **caractérisé en ce que** l'une au moins de la partie de fixation (2) et de la partie mobile (3) comprend une première partie (7 ; 25) et une deuxième partie (8 ; 26) qui sont mobiles l'une par rapport à l'autre, et **en ce que** la position du point de croisement (P) est réglable par un réglage de la position relative de ces première et deuxième parties (7, 8 ; 25, 26).

21. Composant mécanique à pivot flexible selon la revendication 20, **caractérisé en ce que** les première et deuxième parties (7, 8 ; 25, 26) sont mobiles l'une par rapport à l'autre en translation.

22. Composant mécanique à pivot flexible selon la revendication 20, **caractérisé en ce que** les première et deuxième parties (7, 8 ; 25, 26) sont mobiles l'une par rapport à l'autre en rotation.

23. Composant mécanique à pivot flexible selon l'une quelconque des revendications 20 à 22, **caractérisé en ce qu'**il comprend des moyens de liaison (9 ; 27, 28) reliant élastiquement les première et deuxième parties (7, 8 ; 25, 26).

24. Composant mécanique à pivot flexible selon la revendication 23, **caractérisé en ce que** les moyens de liaison (9 ; 27, 28) sont agencés pour autoriser un déplacement relatif des première et deuxième parties (7, 8 ; 25, 26) seulement dans une direction déterminée.

25. Composant mécanique à pivot flexible selon l'une quelconque des revendications 19 à 24, **caractérisé en ce qu'**il est, ou comprend, un oscillateur (1 ; 1' ; 1" ; 1'"), un levier, une bascule ou une ancre d'échappement.

26. Mouvement horloger comprenant un dispositif horloger selon l'une quelconque des revendications 1 à 11, un composant horloger mécanique à pivot flexible selon l'une quelconque des revendications 12 à 18 ou un composant mécanique à pivot flexible selon l'une quelconque des revendications 19 à 25.

27. Procédé de montage d'un mouvement horloger selon la revendication 26, **caractérisé en ce que** ledit composant est, ou comprend, un oscillateur et **en ce que** le procédé comprend une étape consistant à régler la position du point de croisement (P) sur la base de mesures d'isochronisme.

## Patentansprüche

1. Uhrvorrichtung, die eine mechanische Komponente mit flexibler Drehachse (1; 1'; 1"; 1"') vom Typ mit getrennten gekreuzten Klingen umfasst, die einen Befestigungsteil (2) und einen beweglichen Teil (3) umfasst, die durch eine erste und eine zweite elastische Klinge (5, 6) verbunden sind, die sich kontaktlos an einem Kreuzungspunkt (P) kreuzen, wobei die Uhrvorrichtung **dadurch gekennzeichnet ist, dass** sie Regulierungsmittel (16 - 21; 30, 31; 32) zum Regulieren der Position des Kreuzungspunkts (P) umfasst.

2. Uhrvorrichtung nach Anspruch 1, **dadurch gekennzeichnet, dass** zumindest einer von dem Befestigungsteil (2) und dem beweglichen Teil (3) einen ersten Teil (7; 25) und einen zweiten Teil (8; 26) umfasst, die in Bezug zueinander beweglich sind, und dadurch, dass die Regulierungsmittel (16 - 21; 30, 31; 32) gestaltet sind, um die Position des Kreuzungspunkts (P) durch eine Regulierung der relativen Position dieses ersten und zweiten Teils (7, 8; 25, 26) zu regulieren.

3. Uhrvorrichtung nach Anspruch 2, **dadurch gekennzeichnet, dass** der erste und der zweite Teil (7, 8; 25, 26) in Bezug zueinander translatorisch beweglich sind.

4. Uhrvorrichtung nach Anspruch 2, **dadurch gekennzeichnet, dass** der erste und der zweite Teil (7, 8; 25, 26) in Bezug zueinander drehbeweglich sind.

5. Uhrvorrichtung nach einem der Ansprüche 2 bis 4, **dadurch gekennzeichnet, dass** sie Verbindungsmittel (9; 27, 28) umfasst, die den ersten und den zweiten Teil (7, 8; 25, 26) elastisch verbinden.

6. Uhrvorrichtung nach Anspruch 5, **dadurch gekennzeichnet, dass** die Verbindungsmittel (9; 27, 28) gestaltet sind, um eine relative Verlagerung des ersten und des zweiten Teils (7, 8; 25, 26) einzig in eine bestimmte Richtung zuzulassen.

7. Uhrvorrichtung nach einem der Ansprüche 1 bis 6, **dadurch gekennzeichnet, dass** die mechanische Komponente mit flexibler Drehachse ein/en Oszillator (1; 1'; 1"; 1"') ist oder umfasst.

8. Uhrvorrichtung nach einem der Ansprüche 1 bis 6, **dadurch gekennzeichnet, dass** die mechanische Komponente mit flexibler Drehachse ein/en Hebel, eine Wippe oder ein/en Hemmungsanker ist oder umfasst.

9. Uhrvorrichtung nach einem der Ansprüche 1 bis 8, **dadurch gekennzeichnet, dass** die mechanische Komponente mit flexibler Drehachse monolithisch ist.

10. Uhrvorrichtung nach einem der Ansprüche 1 bis 9, **dadurch gekennzeichnet, dass** die Regulierungsmittel (16 - 21; 32) einen Regulierungsexzenter (19; 32) oder eine mikrometrische Regulierungsschraube umfassen.

11. Uhrvorrichtung nach einem der Ansprüche 1 bis 9, **dadurch gekennzeichnet, dass** die Regulierungsmittel eine Baugruppe aus kalibrierten Teilen umfassen, wobei die Regulierung der Position des Kreuzungspunkts (P) durch Zusammenbau von mindestens einem (30, 31) von diesen Teilen mit der mechanischen Komponente mit flexibler Drehachse erfolgt.

12. Mechanische Uhrkomponente mit flexibler Drehachse vom Typ mit getrennten gekreuzten Klingen, die einen Befestigungsteil (2) und einen beweglichen Teil (3) umfasst, die durch eine erste und eine zweite elastische Klinge (5, 6) verbunden sind, die sich kontaktlos an einem Kreuzungspunkt (P) kreuzen, **dadurch gekennzeichnet**, das mindestens einer von dem Befestigungsteil (2) und dem beweglichen Teil (3) einen ersten Teil (7; 25) und einen zweiten Teil (8; 26) umfasst, die in Bezug zueinander beweglich sind, und dadurch, dass die Position des Kreuzungspunkts (P) durch Regulierung der relativen Position dieses ersten und zweiten Teils (7, 8; 25, 26) regulierbar ist.

13. Mechanische Uhrkomponente mit flexibler Drehachse nach Anspruch 12, **dadurch gekennzeichnet, dass** der erste und der zweite Teil (7, 8; 25, 26) in Bezug zueinander translatorisch beweglich sind.

14. Mechanische Uhrkomponente mit flexibler Drehachse nach Anspruch 12, **dadurch gekennzeichnet, dass** der erste und der zweite Teil (7, 8; 25, 26) in Bezug zueinander drehbeweglich sind.

15. Mechanische Uhrkomponente mit flexibler Drehachse nach einem der Ansprüche 12 bis 14, **dadurch gekennzeichnet, dass** sie Verbindungsmittel (9; 27, 28) umfasst, die den ersten und den zweiten Teil (7, 8; 25, 26) elastisch verbinden.

16. Mechanische Uhrkomponente mit flexibler Drehachse nach Anspruch 15, **dadurch gekennzeichnet, dass** die Verbindungsmittel (9; 27, 28) gestaltet sind, um eine relative Verlagerung des ersten und des zweiten Teils (7, 8; 25, 26) einzig in eine bestimmte Richtung zuzulassen.

17. Mechanische Uhrkomponente mit flexibler Drehachse nach einem der Ansprüche 12 bis 16, **dadurch gekennzeichnet, dass** sie ein/en Oszillator (1; 1'; 1"; 1"'), ein/en Hebel, eine Wippe oder ein/en Hemmungsanker ist oder umfasst.

18. Mechanische Uhrkomponente mit flexibler Drehachse nach einem der Ansprüche 12 bis 17, **dadurch gekennzeichnet, dass** sie monolithisch ist.

19. Mechanische Komponente mit flexibler Drehachse vom Typ mit getrennten gekreuzten Klingen, die einen Befestigungsteil (2) und einen beweglichen Teil (3) umfasst, die durch eine erste und eine zweite elastische Klinge (5, 6) verbunden sind, die sich ohne Kontakt in einem Kreuzungspunkt (P) kreuzen, wobei die Komponente monolithisch ist, und **dadurch gekennzeichnet, dass** die Position des Kreuzungspunkts (P) regulierbar ist.

20. Mechanische Komponente mit flexibler Drehachse nach Anspruch 19, **dadurch gekennzeichnet, dass** mindestens eines von dem Befestigungsteil (2) und dem beweglichen Teil (3) einen ersten Teil (7; 25) und einen zweiten Teil (8; 26) umfasst, die in Bezug zueinander beweglich sind, und dadurch, dass die Position des Kreuzungspunkts (P) durch eine Regulierung der relativen Position dieses ersten und zweiten Teils (7, 8; 25, 26) regulierbar ist.

21. Mechanische Komponente mit flexibler Drehachse nach Anspruch 20, **dadurch gekennzeichnet, dass** der erste und der zweite Teil (7, 8; 25, 26) in Bezug zueinander translatorisch beweglich sind.

22. Mechanische Komponente mit flexibler Drehachse nach Anspruch 20, **dadurch gekennzeichnet, dass** der erste und der zweite Teil (7, 8; 25, 26) in Bezug zueinander drehbeweglich sind.

23. Mechanische Komponente mit flexibler Drehachse nach einem der Ansprüche 20 bis 22, **dadurch gekennzeichnet, dass** sie Verbindungsmittel (9; 27, 28) umfasst, die den ersten und den zweiten Teil (7, 8; 25, 26) elastisch verbinden.

24. Mechanische Komponente nach Anspruch 23, **dadurch gekennzeichnet, dass** die Verbindungsmittel (9; 27, 28) gestaltet sind, um eine relative Verlagerung des ersten und des zweiten Teils (7, 8; 25, 26) einzig in eine bestimmte Richtung zuzulassen.

25. Mechanische Komponente mit flexibler Drehachse nach einem der Ansprüche 19 bis 24, **dadurch gekennzeichnet, dass** sie ein/en Oszillator (1; 1'; 1"; 1"'), ein/en Hebel, eine Wippe oder ein/en Hemmungsanker ist oder umfasst.

26. Uhrwerk, das eine Uhrvorrichtung nach einem der Ansprüche 1 bis 11, eine mechanische Uhrkomponente mit flexibler Drehachse nach einem der Ansprüche 12 bis 18 oder eine mechanische Komponente mit flexibler Drehachse nach einem der Ansprüche 19 bis 25 umfasst.

27. Verfahren zur Montage eines Uhrwerks nach Anspruch 26, **dadurch gekennzeichnet, dass** die Komponente ein/en Oszillator ist oder umfasst, und dadurch, dass das Verfahren einen Schritt umfasst, der darin besteht, die Position des Kreuzungspunkts (P) basierend auf Isochronismusmessungen zu regulieren.

## Claims

1. Timepiece device comprising a flexible pivot mechanical component (1; 1'; 1"; 1'") of the type with separate crossed strips, said component comprising a fixing part (2) and a movable part (3) which are connected by first and second elastic strips (5, 6) crossing without contact at a crossing point (P), said timepiece device being **characterised in that** it comprises adjusting means (16-21; 30, 31; 32) for adjusting the position of the crossing point (P).

2. Timepiece device as claimed in claim 1, **characterised in that** at least one of the fixing part (2) and the movable part (3) comprises a first part (7; 25) and a second part (8; 26) which can move with respect to each other, and **in that** the adjusting means (16-21, 30, 31; 32) are arranged to adjust the position of the crossing point (P) by adjusting the relative position of these first and second parts (7, 8; 25, 26).

3. Timepiece device as claimed in claim 2, **characterised in that** the first and second parts (7, 8; 25, 26) can move with respect to each other in translation.

4. Timepiece device as claimed in claim 2, **characterised in that** the first and second parts (7, 8; 25, 26) can move with respect to each other in rotation.

5. Timepiece device as claimed in any one of claims 2 to 4, **characterised in that** it comprises connecting means (9; 27, 28) elastically connecting the first and second parts (7, 8; 25, 26).

6. Timepiece device as claimed in claim 5, **characterised in that** the connecting means (9; 27, 28) are arranged to permit a relative displacement of the first and second parts (7, 8; 25, 26) only in a specific direction.

7. Timepiece device as claimed in any one of claims 1 to 6, **characterised in that** the flexible pivot mechanical component is, or comprises, an oscillator (1; 1'; 1"; 1"').

8. Timepiece device as claimed in any one of claims 1 to 6, **characterised in that** the flexible pivot mechanical component is, or comprises, a lever, a rocker or an escapement anchor.

9. Timepiece device as claimed in any one of claims 1 to 8, **characterised in that** the flexible pivot mechanical component is monolithic.

10. Timepiece device as claimed in any one of claims 1 to 9, **characterised in that** the adjusting means (16-21; 32) comprise an adjusting eccentric (19; 32) or a micrometric adjusting screw.

11. Timepiece device as claimed in any one of claims 1 to 9, **characterised in that** the adjusting means comprise a set of calibrated pieces, the position of the crossing point (P) being adjusted by mounting at least one (30, 31) of these pieces on the flexible pivot mechanical component.

12. Flexible pivot mechanical timepiece component of the type with separate crossed strips, comprising a fixing part (2) and a movable part (3) which are connected by first and second elastic strips (5, 6) crossing without contact at a crossing point (P), **characterised in that** at least one of the fixing part (2) and the movable part (3) comprises a first part (7; 25) and second part (8; 26) which can move with respect to each other, and **in that** the position of the crossing point (P) can be adjusted by adjusting the relative position of these first and second parts (7, 8; 25, 26).

13. Flexible pivot mechanical timepiece component as claimed in claim 12, **characterised in that** the first and second parts (7, 8; 25, 26) can move with respect to each other in translation.

14. Flexible pivot mechanical timepiece component as claimed in claim 12, **characterised in that** the first and second parts (7, 8; 25, 26) can move with respect to each other in rotation.

15. Flexible pivot mechanical timepiece component as claimed in any one of claims 12 to 14, **characterised in that** it comprises connecting means (9; 27, 28) elastically connecting the first and second parts (7, 8; 25, 26).

16. Flexible pivot mechanical timepiece component as claimed in claim 15, **characterised in that** the connecting means (9; 27, 28) are arranged to permit a relative displacement of the first and second parts (7, 8; 25, 26) only in a specific direction.

17. Flexible pivot mechanical timepiece component as claimed in any one of claims 12 to 16, **characterised in that** it is, or comprises, an oscillator (1; 1'; 1"; 1"'), a lever, a rocker or an escapement anchor.

18. Flexible pivot mechanical timepiece component as claimed in any one of claims 12 to 17, **characterised in that** it is monolithic.

19. Flexible pivot mechanical component of the type with separate crossed strips, comprising a fixing part (2) and a movable part (3) which are connected by first and second elastic strips (5, 6) crossing without contact at a crossing point (P), said component being monolithic and **characterised in that** the position of the crossing point (P) is adjustable.

20. Flexible pivot mechanical component as claimed in claim 19, **characterised in that** at least one of the fixing part (2) and the movable part (3) comprises a first part (7; 25) and a second part (8; 26) which can move with respect to each other, and **in that** the position of the crossing point (P) can be adjusted by adjusting the relative position of these first and second parts (7, 8; 25, 26).

21. Flexible pivot mechanical component as claimed in claim 20, **characterised in that** the first and second parts (7, 8; 25, 26) can move with respect to each other in translation.

22. Flexible pivot mechanical component as claimed in claim 20, **characterised in that** the first and second parts (7, 8; 25, 26) can move with respect to each other in rotation.

23. Flexible pivot mechanical component as claimed in any one of claims 20 to 22, **characterised in that** it comprises connecting means (9; 27, 28) elastically connecting the first and second parts (7, 8; 25, 26).

24. Flexible pivot mechanical component as claimed in claim 23, **characterised in that** the connecting means (9; 27, 28) are arranged to permit a relative displacement of the first and second parts (7, 8; 25, 26) only in a specific direction.

25. Flexible pivot mechanical component as claimed in any one of claims 19 to 24, **characterised in that** it is, or comprises, an oscillator (1; 1'; 1"; 1"'), a lever, a rocker or an escapement anchor.

26. Timepiece movement comprising a timepiece device as claimed in any one of claims 1 to 11, a flexible pivot mechanical timepiece component as claimed in any one of claims 12 to 18 or a flexible pivot mechanical component as claimed in any one of claims 19 to 25.

27. Method for assembling a timepiece movement as claimed in claim 26, **characterised in that** said component is, or comprises, an oscillator, and **in that** the method comprises a step consisting of adjusting the position of the crossing point (P) on the basis of isochronism measurements.
